# EUROPEAN PATENT SPECIFICATION

(11) **EP 1 275 496 B1**
(45) Date of publication and mention of the grant of the patent: **21.09.2011**
(21) Application number: 01917785.6
(22) Date of filing: 02.04.2001
(51) Int. Cl.: B32B 27/30, C08F 20/36, C08F 299/06, C08F 2/46, B32B 27/32, B32B 27/40, C08G 18/67

(54) **LAYERED PRODUCT, BONDING METHOD, AND COMPOSITION CURABLE WITH ACTINIC ENERGY RAY**
MEHRSCHICHTGEGENSTAND, KLEBEVERFAHREN SOWIE DURCH AKTISCHEN ENERGIESTRAHL HÄRTBARE ZUSAMMENSETZUNG
PRODUIT A COUCHES, PROCEDE DE LIAISON, ET COMPOSITION RETICULABLE SOUS L'EFFET DE RAYONS ACTINIQUES

(30) Priority: 03.04.2000 JP 2000100186; 25.05.2000 JP 2000154117
(43) Date of publication of application: 15.01.2003
(73) Proprietor: Mitsubishi Chemical Corporation, Tokyo 108-0014 (JP)
(72) Inventor: HATA, Kazuyuki Mitsubishi Chemical Corp. Yokkaichi Plant, Mie 510-0848 (JP); YAMADA, Katsuhiko Mitsubishi Chemical Corp.Yokkaichi Plant, Mie 510-0848 (JP)
(74) Representative: Vossius & Partner
(86) International application number: PCT/JP2001/002863
(87) International publication number: WO 2001/074586

(56) References cited:
- EP-A- 0 507 633
- EP-A- 0 542 219
- GB-A- 1 453 429
- JP-A- 3 143 913
- JP-A- 5 194 879
- JP-A- 6 158 016
- JP-A- 10 001 529
- JP-A- 62 011 778
- JP-A- 63 221 119
- JP-A- 63 301 233
- US-A- 5 068 305
- US-A- 5 567 761
- US-A- 5 620 571

## Description

This invention relates to an active energy ray-curable composition, particularly to a composition capable of forming a coat with a good adhesion when applied to polyolefin such as polypropylene, and to a laminate and an adhering method based on the composition.

Additionally, in this specification, the term "(meth)acryloyl group" means an acryloyl group and/or a methacryloyl group, the term "(meth)acryl compounds" means acryl compounds and/or methacryl compounds, the term "(meth)acrylates" means acrylates and/or methacrylate, and the term "(meth)acrylic acid" means acrylic acid and/or methacrylic acid.

Polyolefins have excellent chemical properties and are light-weight and inexpensive, and hence they are being used in a large amount in various fields. One of the problems with the polyolefins is that, since they are nonpolar and poor in adhesion with other materials, they show poor adhesive properties when subjected to printing or coating. In particular, in order to form a coat with good adhesive properties on the polyolefin using an active energy ray-curable composition which contracts upon curing, it is believed to be necessary to improve adhesion of the polyolefins themselves by previously subjecting them to corona discharge treatment or the like.

Since it is troublesome to previously improve adhesion of the polyolefins by the corona discharge treatment or the like, there have conventionally been proposed several active energy ray-curable compositions which provide a coat having a good adhesion to polyolefins without such treatment. For example,

JP-A-279706/1994 describes that an excellent undercoat layer for deposition can be formed by coating a composition containing a chlorinated polyolefin, a (meth)acryloyloxy group-having compound and an acrylic copolymer on a polyolefin, then curing the coated composition. JP-A- 237288/1998 describes that a coat with a good adhesion can be formed by coating a composition containing a polyester resin obtained by reacting a dibasic anhydride obtained by conducting Diels-Alder reaction between an adduct of cyclopentadiene and allyl chloride and maleic anhydride with an alcohol obtained by adding allyl alcohol to a cyclopentadiene polymer, and an ethylenically unsaturated compound on a polyolefin, then curing the coated composition. JP-A-310621/1998 describes that a coat with a good adhesion can be formed by coating a composition containing epoxy (meth)acrylate, dicyclopentenyl (meth)acrylate and tricyclodecanyl (meth)acrylate on polypropylene or the like, then curing the coated composition.

US-A-5,068,305 relates to a powder coating composition comprising a polyurethane having a melting point in the range of 50 °C to 180 °C prepared from:
A) an isocyanate compound;
B) a monohydric alcohol containing (meth)acryloyl groups; and
C) an organic compound which is free from (meth)acryloyl groups and contains at least two alcoholic hydroxyl groups.

The composition may further contain levelling agents such as polybutylacrylate or silicones.

US-A-5,620,751 relates to a powder coating composition comprising a polyurethane component prepared from:
A) an isocyanate compound;
B) a monohydric alcohol containing (meth)acryloyl groups; and
C) an organic compound which is free from (meth)acryloyl groups and contains at least two alcoholic hydroxyl groups; and
a unsaturated polyester component.

The composition may further contain levelling agents such as polybutylacrylate or silicones.

US-A-5,959,775 relates to a solventless bead bond composition comprising a urethane/acrylate semi-interpenetrating polymer network (semi-IPN) in which the urethane component is a thermoplastic and the acrylate component is a thermoset. The thermoplastic urethane component is prepared in the presence of radiation-curable acrylate monomers from (a) a prepolymer derived from a mixture of a difunctional isocyanate and a polyol with (b) a diol or diol equivalent (cf. col. 4, lines 15 to 19).

As is described above, there have been proposed several compositions which can form a coat with a good adhesion to polyolefins when cured by irradiation with active energy rays. However, none of them are satisfactory. Thus, the invention intends to provide an active energy ray-curable composition which can be prepared from easily available materials, which shows good coating properties, and which can form a coat with a good adhesion to polyolefins when cured.

The inventors have found that, in an active energy ray-curable composition containing a reaction product between an isocyanate compound and a (meth)acryl compound having a (meth)acryloyl group and being capable of reacting with an isocyanate group, the use of an isocyanate compound having an isocnanate group bound to a non-aromatic hydrocarbon ring as the isocyanate compound serves to markedly improve adhesion of the resultant active energy ray-curable composition to polyolefins, thus having achieved the invention. That is, the gist of the invention lies in the following.
1. A laminate comprising a polyolefin substrate having formed thereon a layer comprising an active energy ray-curable composition which comprises a reaction product between an isocyanate compound having an isocyanate group bound to a non-aromatic hydrocarbon ring, a (meth)acryl compound having a (meth)acryloyl group and being capable of reacting with the isocyanate group and a hydroxyl group-containing compound; and a filming resin, wherein the reaction product between the isocyanate compound, the (meth)acryl compound and the hydroxyl group-containing compound has a softening point of 40°C or higher, which is the temperature at which melt viscosity becomes 5000 Pa·s.
2. A method of adhering polyolefin, which comprises using an active energy ray-curable composition which comprises a reaction product between an isocyanate compound having an isocyanate group bound to a non-aromatic hydrocarbon ring, a (meth)acryl compound having a (meth)acryloyl group and being capable of reacting with the isocyanate group and a hydroxyl group-containing compound; and a filming resin, wherein the reaction product between the isocyanate compound, the (meth)acryl compound and the hydroxyl group-containing compound has a softening point of 40°C or higher, which is the temperature at which melt viscosity becomes 5000 Pa·s.
3. A process for producing a substrate with a coat, which comprises forming on the substrate a liquid coat layer, said coat layer comprising an active energy ray-curable composition comprising a reaction product between an isocyanate compound having a melting point of 40°C or higher, a (meth)acryl compound having a (meth)acryloyl group and being capable of reacting with the isocyanate group and a hydroxyl group-containing compound, which product has a softening point of 40°C or higher, which is the temperature at which melt viscosity becomes 5000 Pa·s; and a filming resin, conducting fabrication, then curing the active energy ray-curable composition.
4. A laminate comprising a substrate having formed thereon a layer comprising an active energy ray-curable composition comprising a reaction product between an isocyanate compound having a melting point of 40°C or higher, a (meth)acryl compound having a (meth)acryloyl group and being capable of reacting with the isocyanate group and a hydroxyl group-containing compound, which product has a softening point of 40°C or higher, which is the temperature at which melt viscosity becomes 5000 Pa·s; and a filming resin, wherein the content of the filming resin is 20 to 40% by weight, based on the weight of the composition excluding the solvent.
5. An active energy ray-curable composition, which comprises a reaction product between an isocyanate compound having an isocyanate group bound to a non-aromatic hydrocarbon ring, a (meth)acryl compound having a (meth)acryloyl group and being capable of reacting with the isocyanate group and a hydroxyl group-containing compound; and a filming resin, wherein the content of the filming resin is 20 to 40% by weight, based on the weight of the composition excluding the solvent, wherein the reaction product between the isocyanate compound, the (meth)acryl compound and the hydroxyl group-containing compound has a softening point of 40°C or higher, which is the temperature at which melt viscosity becomes 5000 Pa·s.

### Isocyanate compounds having an isocyanate group bound to a non-aromatic hydrocarbon ring

The isocyanate compounds to be used in the invention which have an isocyanate group bound to a non-aromatic hydrocarbon ring (hereinafter also referred to merely as "isocyanate compounds") are so-called alicyclic isocyanate compounds or the derivatives thereof. As the alicyclic isocyanate compounds, isophoronediisocyanate, hydrogenated tolylenediisocyanate, hydrogenated xylylenediisocyanate and hydrogenated diphenylmethanediisocyanate may be commonly used. Of these, isophoronediisocyanate is preferably used.

As the derivatives of the alicyclic isocyante compounds, there are commonly used trimers of alicyclic isocyanate wherein the alicyclic isocyanate compound is trimerized so as to form an isocyanurate ring, a reaction product between an alicyclic isocyanate compound and an active hydrogen-containing compound, and a reaction product between an alicyclic isocyanate trimer and an active hydrogen-containing compound. Preferably, isophorone diisocyanate trimer and a reaction product between isophorone diisocyanate and trimethylolpropane are used. These are commercially sold as VESTANAT T1890 (made by Huls Co.), Mitec NY215A (Mitsubishi Chemical Corporation), and are easily available from the market.

As the alicyclic isocyanate compounds and the derivatives thereof, those are preferably used which have a melting point of 40°C or higher. A UV ray-curable composition obtained by using the alicyclic isocyanate compound and the derivative thereof having a melting point of 40°C or higher does not form a fingermark when touched on its dried coat surface on the substrate with a finger (tack-free), thus fabrication after forming the coat film being conducted with ease. Examples of the alicyclic isocyanate compound and the derivative thereof having a melting point of 40°C or higher include isophoronediisocyanate trimer (110°C) and a reaction product between isophorone diisocyanate and trimethylolpropane (3:1 in molar ratio) (mp 67°C).

As the hydroxyl group-containing compounds, there are used polyhydric alcohols having three or more hydroxyl groups such as glycerin, trimethylolpropane, trimethylolethane, 1,2,6-hexanetriol, 2-hydroxyethyl-1,6-hexanediol, 1,2,4-butanetriol, erythritol, sorbitol, pentaerythritol and dipentaerythritol; aliphatic glycols such as ethylene glycol, diethylene glycol, propylene glycol, dipropylene glycol, tripropylene glycol, 1,2-butanediol, 1,3-butanediol, 1,4-butanediol, 2,3-butanediol, 2-methyl-1,3-propanediol, 2,2-diethyl-1,3-propanediol, 2-methyl-2-propyl-1,3-propanediol, 2-butyl-2-ethyl-1,3-propanediol, 1,5-pentanediol, 3-methyl-1,5-pentanediol, 2-methyl-2,4-pentanediol, 1,6-hexanediol, 2-ethyl-1,3-hexanediol, neopentyl glycol, 1,3,5-trimethyl-1,3-pentanediol, 2,2,4-trimethyl-1,3-pentanediol, 1,8-octanediol, 1,9-nonanediol and 2-methyl-1,8-octanediol; alicyclic glycols such as 1,4-cyclohexanediol and 1,4-cyclopexanedimethanol; and aromatic glycols such as xylylene glycol and bishydroxyethoxybenzene.

Also, as the hydroxyl group-containing compounds, there may be used high molecular weight polymers such as polyether polyols, polyester polyols, polyether ester polyols polycarbonate polyols and polyacryl polyols.

Examples of the polyether polyols include those which are obtained by addition polymerization of an alkylene oxide such as ethylene oxide or propylene oxide to glycols such as bisphenol A, ethylene glycol, propylene glycol and diethylene glycol, to polyols having 3 or more hydroxyl groups such as glycerin, trimethylolethane, trimethylolpropane and pentaerythritol, or to polyamines such as ethylenediamine and toluenediamine; and polytetramethylene ether glycols obtained by ring-opening polymerization of tetrahydrofuran.

Examples of the polyester polyols include those which are obtained by polycondensation reaction between carboxylic acids such as dicarboxylic acids exemplified by succinic acid, adipic acid, sebacic acid, azelaic acid and phthalic acid or tri- or tetra-carboxylic acids exemplified by trimellitic acid and pyromellitic acid and diols such as ethylene glycol, propylene glycol, 1,4-butanediol, 1,5-pentanediol, 3-methyl-1,5-pentanediol, 2,2-diethylpropanediol, 2-ethyl-2-butylpropanediol, 1,6-hexanediol, neopentylglycol, diethylene glycol, 1,4-cyclohexanediol and 1,4-cyclohexanedimethanol, triols such as trimethylolpropane and glycerin or aromatic polyhydroxy compounds such as bisphenol A and bisphenol F.

Examples of the polyether ester polyols include a reaction product between polyester glycol and alkylene oxide, and a reaction product between an ether group-containing diol or a mixture thereof with other glycol and the aforesaid dicarboxylic acid or the anhydride thereof, such as poly(polytetramethylene ether) adipate.

Examples of the polycarbonate polyols include those polycarbonate polyols which are obtained by alcohol-eliminating condensation reaction between a polyhydric alcohol and a dialkyl carbonate such as dimethyl or diethyl carbonate, phenol-eliminating condensation reaction between a polyhydric alcohol and diphenylcarbonate, and ethylene glycol-eliminating condensation reaction between a polyhydric alcohol and ethylene carbonate. Examples of the polyhydric alcohol to be used in these condensation reactions include, for example, aliphatic diols such as 1,6-hexanediol, diethylene glycol, propylene glycol, 1,4-butanediol, 1,5-pentanediol, 3-methyl-1,5-pentanediol, 2,2-diethylpropanediol, 2-ethyl-2-butylpropanediol and neopentyl glycol; and alicyclic diols such as 1,4-cyclohexanediol and 1,4-cyclohexanedimethanol.

Examples of the amino group-containing compounds include hexamethylenediamine, xylenediamine, isophoronediamine and N,N-dimethylethylenediamine. Also, aminoalcohols such as monoethanolamine and diethanolamine can be used as the active hydrogen-containing compounds.

The reaction between the alicyclic isocyanate compound or its trimer and the active hydrogen-containing compound is usually conducted at a temperature of 10°C to 90°C. Although the reaction proceeds in the absence of a catalyst, there may be used organic tin catalysts such as dibutyltin dilaurate and dibutyltin dioctoate, organic lead catalysts such as lead octanoate or tertiary amine compounds such as triethylamine, dimethyloctylamine and diazabicycloundecene. Use of the catalyst serves to complete the reaction in a shorter time. Progress of the reaction can be monitored by measuring the content of isocyanate group. The reaction system is cooled at a point when the content of isocyanate group reaches an intended level to thereby quench the reaction.

The reaction may be conducted in the absence or presence of a solvent. In general, use of a solvent facilicates to control the reaction and permits to adjust viscosity of a resultant reaction solution. As the solvent, there may be used those inert solvents which are commonly used for this type of reactions, such as aromatic hydrocarbon solvents (e.g., toluene and xylene), ketone solvents (e.g., methyl ethyl ketone, methyl isobutyl ketone and cyclohexanone), ester solvents (e.g., ethyl acetate, butyl acetate and isobutyl acetate), glycol ether ester solvents (e.g., diethylene glycol ethyl ether acetate, propylene glycol methyl ether acetate, 3-methyl-3-methoxybutyl acetate and ethyl-3-ethoxypropionate), ether solvents (e.g., tetrahydrofuran and dioxane), and aprotic polar solvents (e.g., N-methylpyrrolidone).

### (Meth)acryl compounds having a (meth)acryloyl group and being capable of reacting with isocyanate group

As the (meth)acryl compounds having a (meth)acryloyl group and being capable of reacting with isocyanate group (hereinafter sometimes abbreviated as "(meth)acryl compounds"), there are illustrated (meth)acrylic acid itself, hydroxy esters which are hydroxyl group-containing reaction products between (meth)acrylic acid and a polyhydroxy compound and, further, compounds obtained by adding ethylene oxide, propylene oxide or caprolactone to the hydroxyl group of the hydroxy esters and compounds obtained by reacting a polycarboxylic acid anhydride with the hydroxyl group of the hydroxy esters to thereby convert the hydroxyl group functioning as the active hydrogen group to carboxyl group.

Specifically, there are illustrated hydroxy (meth)acrylates such as hydroxyethyl (meth)acrylate, hydroxypropyl (meth)acrylate, hydroxybutyl (meth)acrylate, trimethylolpropane diacrylate, pentaerythritol triacrylate, dipentaerythritol tetraacrylate and dipentaerythritol pentaacrylate; and caprolactone adducts thereof, ethylene oxide adducts thereof, propylene oxide adducts thereof and ethylene oxide-propylene oxide adducts thereof.

In addition, there are illustrated reaction products obtained by reacting the above-described hydroxy (meth)acrylates with a carboxylic acid anahydride (e.g., maleic anhydride, succinic anhydride, phthalic anhydride or tetrahydrophthalic anhydride), such as pentaerythritol triacrylate succinic acid monoester, dipentaerythritol pentaacrylate succinic acid monoester, pentaerythritol triacrylate maleic acid monoester, dipentaerythritol pentaacrylate maleic acid monoester, pentaerythritol triacrylate phthalic acid monoester, dipentaerythritol triacrylate phthalic acid monoester, pentaerythritol triacrylate tetrahydrophthalic acid monoester and dipentaerrythritol pentaacrylate tetrahydrophthalic acid monoester.

Of these, there are used preferably hydroxy (meth)acrylates, particularly preferably reaction products between pentaerythritols and (meth)acrylic acid (e.g., pentaerythritol monoacrylate, pentaerythritol diacrylate and pentaerythritol triacrylate), still more preferably compounds having 2 or more (meth)acryloyl groups per molecule, most preferably pentaerythritol triacrylate.

### Reaction products between an isocyanate compound and a (meth)acryl compound

The reaction between an isocyanate compound and a (meth)acryl compound can be conducted in the same manner as with the aforesaid reaction between the alicyclic isocyanate compound or the trimer thereof and the active hydrogen-containing compound. Preferably, the reaction is conducted by adjusting the concentration of a reaction product in the reaction solution to 30 to 80% by weight using a solvent and conducting the reaction at a temperature of 50 to 80°C in the presence of an organic tin catalyst in an amount of 0.01 to 0.1% by weight based on the raw materials for the reaction. As to the ratio of the isocyanate compound to the (meth)acryl compounds to be charged, it is preferred to use the (meth)acryl compound to be reacted to the isocyanate compound in an amount of 0.5 mol or more in terms of its functional group, particularly preferably 1 mol or more, per mol of isocyanate group of the isocyanate compound. The reaction time is usually about 3 to 8 hours, but it is preferred to trance the content of isocyanate group in the reaction solution by analysis and discontinue the reaction at a point when the content reaches the intended level.

The thus obtained reaction product between the isocyanate compound and the (meth)acryl compound has a softening point of preferably 40°C or more. In case when the softening point does not reach 40°C, it becomes difficult to form a coat with no tack and no fluidity by coating a UV ray-curable composition containing the resultant reaction product on a substrate and drying it. Additionally, the softening point is measured on a sample prepared by removing the solvent from the above-described reaction product, in the following manner.

### <Measurement of softening point>

Apparatus used: ARES-2KFRTNI manufactured by Rheometrix Co. Measuring conditions:
Measuring mode: test on temperature dependence of dynamic viscoelasticity; 25 mm parallel plate
Range of measuring temperature: -50 to 90°C
Vibration frequency: 1 rad/sec

In the case of measuring using the above-described apparatus under the above-described conditions, the temperature at which melt viscosity becomes 5000 Pa·s is defined as the softening point.

The active energy ray-curable composition of the invention may contain, in addition to the reaction product between the above-described isocyanate compound and the (methyl) acryl compound, those which are commonly used for curable compositions such as a filming resin, a reactive monomer, a photopolymerization initiator, a polymerization inhibitor, a colorant, a surfactant and a solvent.

In the active energy ray-curable composition of the invention, the content of the reaction product between the isocyanate compound and the (meth)acryl compound is usually 10% by weight or more, preferably 30% by weight or more, based on the weight of the active energy ray-curable composition excluding the solvent. In case when the proportion of the reaction product between the isocyanate compound and the (meth)acryl compound is too little, there results an insufficient adhesion to a substrate, particularly polypropylene.

Usually, a sufficient adhesion to a substrate can be obtained by the above-described reaction product alone but, in the case where it is difficult to form a coat, adhesion to the substrate can be improved by incorporating a filming resin. As such filming resin, there may be used methacrylic resins, chlorinated polypropylene, epoxy resins, polyurethane resins or polyester resins. Preferably, a methacrylic resin or chlorinated polypropylene is used, with a methacrylic resin containing methyl methacrylate as a major component being particularly preferably used. The content of the filming resin is usually 20 to 40% by weight based on the weight of the composition excluding the solvent.

As the reactive monomer, there may be used methyl (meth) acrylate, ethyl (meth) acrylate, propyl (meth)acrylate, butyl (meth)acrylate, 2-ethylhexyl (meth)acrylate, stearyl (meth) acrylate, lauryl (meth)acrylate, tridecyl (meth) acrylate, trimethylolpropane triacrylate, tris(acryloxyethyl)-isocyanurate, pentaerythritol tetraacrylate and dipentaerythritol hexaacrylate, Hardness or durability of a resultant coat can be improved by incorporating the reactive monomer. The content of the reactive monomer is usually 80% by weight or less, preferably 50% by weight or less based on the weight of the composition excluding the solvent. In case when the proportion of the reactive monomer is too little, the intended purposes might not be attained whereas, in case when the proportion is too much, there might result a reduced adhesion to a substrate.

As the photopolymerization initiator, there may be used benzoin ethyl ether, acetophenone, diethoxyacetophenone, benzyl dimethyl ketal, 2-hydroxy-2-methylpropiophenone, 1-hydroxycyclohexyl phenyl ketone, benzophenone, p-chlorobenzophenone, Michler's ketone, isoamyl N,N-dimethylaminobenzoate, 2-chlorothioxanthone and 2,4-diethylthioxanthone. The amount of the photopolymerization initiator is usually 0.1 to 15% by weight, preferably 1 to 5% by weight, per 100% by weight of the components of the composition except for solvents. In case when the proportion of the photopolymerization initiator is too little, photocurability tends to be insufficient whereas, too much, there tends to result a cured products with deteriorated properties such as hardness.

As the solvent, so-called inert solvents as illustrated in the description with respect to the reaction between the isocyanate compound and the active hydrogen-containing compound may be used.

In the case of using a solvent in the reaction between the isocyanate compound and the (meth)acryl compound, the reaction product between the isocyanate compound and the (meth)acryl compound is obtained in a state of the reaction product being dissolved in the solvent. Hence, it can be used as such, or in a concentrated state, as a raw material for the active energy ray-curable composition of the invention, in which the reaction product between the isocyanate compound and the (meth)acryl compound is in a state of being dissolved in the solvent.

The amount of the solvent is usually 10 to 80% by weight, preferably 30 to 70% by weight, in the composition. In case when the proportion of the solvent is too little, there tends to result a high viscosity and poor coating properties whereas, too much, there might result a composition with such a low viscosity that sag of the active energy ray-curable composition occurs upon coating or that it takes a long time to dry or cure the composition.

The active energy ray-curable composition of the invention can form a coat with a good adhesion on various substrates such as plastics (e.g., polyolefin, polyester, polycarbonate and (meth)acrylic resin), paper and metals. In particular, it can form a coat with a good adhesion on polyolefin with which it is generally believed to be difficult to form a coat with a good adhesion thereon. Since the active energy ray-curable composition of the invention shows a good adhesion to a substrate, a sufficient adhesion force can be obtained even without previous surface treatment such as corona discharge treatment, plasma treatment or acid treatment of the substrate surface to be coated therewith. It is also possible to adhere these substrates to other materials by using this composition therebetween. Specific examples of the polyolefins to be used as substrates include α-olefin (co)polymers such as polyethylene, polypropylene, polybutene-1, ethylene-propylene copolymer, ethylene-butene copolymer, ethylene-propylene-diene copolymer and isobutene-isoprene copolymer; copolymers between α-olefin and a conjugated diene; and various copolymers between α-olefin and other vinyl monomer such as vinyl ester (e.g., vinyl acetate), (meth)acrylic acid, (meth)acrylic acid ester, maleic anhydride, styrene or vinylsilane (e.g., vinyltrimethoxysilane, γ-(meth)acryloyloxypropyltrimethoxysilane.

The active energy ray-curable composition of the invention may be used as an ink, a paint, an adhesive or an anchor coat for deposition utilizing the adhesion properties to substrates.

In the case of using the active energy ray-curable composition of the invention as an ink, it suffices to print an ink containing the composition on a substrate according to off-set printing, gravure printing, screen printing, relief printing, heat-sensitive transfer process, melt transfer process, sublimation heat-sensitive transfer process or ink jet process and, after drying the ink, irradiate it with active energy rays to cure.

In the case of using as a paint, an anchor coat material for deposition or a surface-protecting material, it suffices to coat the composition on a substrate using a bar coater, a spin coater, a knife coater, gravure coater or a roll coater and, after drying the composition, irradiate it with active energy rays to cure. For example, in the case of forming a coat of the active energy ray-curable composition of the invention on the surface of a substrate as a surface-protecting material for improving abrasion resistance of the substrate, it suffices to coat the composition on the substrate in a dry thickness of usually 1 to 15 µm, preferably 3 to 15 µm, and, after drying it, irradiate it with active energy rays, preferably UV rays to cure.

As is described above, when the active energy ray-curable composition of the invention is used as an ink, a paint, an adhesive or a surface-protecting agent, there results a laminate wherein the layer of the active energy-curable composition of the invention is formed on the substrate. In this case, the shape of substrate is not particularly limited. Also, the layer thickness of the active energy ray-curable composition is usually 0.1 to 200 fay, preferably 1 to 100 µm. In particular, in the case of using as an ink or a paint, the thickness is usually 1 to 100 µm, preferably 5 to 50 µm and, in the case of using asn anchor coat material, the thickness is usually 1 to 50 µm, preferably 2 to 10 µm.

Examples of the active energy rays to be used for curing the active energy ray-curable composition of the invention include UV rays, electron beams and radiation, with UV rays being preferably used. As a light source of UV rays, there may usually be used a xenon lamp, a low-pressure mercury lamp, a high-pressure mercury lamp, a metal halide lamp, a carbon arc lamp or a tungsten lamp.

In addition, the active energy ray-curable composition obtained by using, among the reaction products between the isocyanate compound and the (meth)acryl compound, the reaction product having a softening point of 40°C or higher loses its fluidity upon being dried, and hence it can preferably be used as an ink for multi-color printing utilizing the fluidity-losing properties. That is, in the case of conducting multi-color printing using inks containing the composition, because the inks do not run mutually to form no mixed color, all colors may be printed, followed by curing the printed surface at the same time in place of curing the printed surface every time printing a particular color, thus the steps being made simplified.

Similarly, utilizing the properties of losing fluidity upon being dried, the resulting product can be used as a substrate for accurate emboss processing. That is, when a coat formed by coating the active energy ray-curable composition of the invention on a substrate and drying it is subjected to emboss processing, a metal mold is not stained since the coat does not adhere to the metal mold and, owing to no fluidity of the coat, the shape formed by the emboss processing can be kept well until curing.

Further, the active energy ray-curable composition containing the reaction product between the isocyanate compound having a melting point of 40°C or higher and the (meth)acryl compound having a (meth)acryloyl group and being capable of reacting with an isocyanate group, which product has a softening point of 40°C or higher shows a more remarkable effect of losing its fluidity upon being dried. In the case of coating this composition on a substrate, the dried coated film shows such a low tackiness that, even when touched with a finger, no finger prints remain, and hence various fabrications such as sputtering can be conducted with ease before curing the coated film by irradiation with active energy rays. In this case, substrates to be used are not particularly limited but, preferably, polyesters such as polyethylene terephthalate and polybutylene terephthalate are used.

The isocyanate compound having a melting point of 40°C or higher is a compound having a melting point of 40°C or higher and having at least one isocyanate group. For example, there may be used tolylenediisocyanate trimer (mp: 110°C) ; and a reaction product between tolylenediisocyanate and an active hydrogen-containing compound such as a reaction product between tolylenediisocyanate and trimethylolpropane (3:1 in molar ratio) (mp: 43°C). Preferably, there are illustrated the aforesaid compounds having an isocyanate group bound to a non-aromatic hydrocarbon ring, more preferably alicyclic isocyanate compounds and the derivatives thereof, particularly preferably isophoronediisocyanate trimer (mp: 110°C) and a reaction product between isophoronediisocyanate and trimethylolpropane (3:1 in molar ratio) (mp: 67°C). When the isocyanate compound used has a melting point of lower than 40°C, it is difficult to form a tack-free coat.

### <Examples>

The invention is more specifically described below by reference to Examples which, however, do not limit the invention in any way.

### Synthesis of reaction product (A):

206.1g of ethyl acetate and 133.5g of isophoronediisocyanate trimer [VESTANAT T1890(manufactured by HULS Co.) ; mp: 110°C] were charged in a reactor equipped with a stirrer, a reflux condenser, a dropping funnel and a thermometer, and the temperature within the system was raised to 80°C to dissolve. Subsequently, air was introduced into the solution, and 0.38g of hydroquinone monomethyl ether, 249.3g of pentaerythritol triacrylate [Viscoat 300 (made by Osaka Organic Chemical Industry Co., Ltd.)] and 0.38g of dibutyltin dilaurate were charged therein, followed by conducting the reaction at the same temperature for 5 hours. After completion of the reaction, 688.9g of ethyl acetate was added thereto to cool the reaction mixture and obtain a reaction product solution containing a reaction product (A). Analysis of infrared absorption spectrum of the reaction product solution confirmed disappearance of absorption of isocyanate group. A product obtained by distilling off ethyl acetate from the reaction product solution had a softening temperature of 43°C.

### Synthesis of reaction product (B):

198.5g of ethyl acetate and 308.3g of isophoronediisocyanate trimer [VESTANAT T1890; mp: 110°C] were charged in a reactor equipped with a stirrer, a reflux condenser, a dropping funnel and a thermometer, and the temperature within the system was raised to 80°C to dissolve. Subsequently, air was introduced into the solution, and 0.33g of hydroquinone monomethyl ether, 154.9g of hydroxyethyl acrylate and 0.33g of dibutyltin dilaurate were added thereto, followed by conducting the reaction at the same temperature for 8 hours. Further, 0.33g of dibutyltin dilaurate was added thereto, followed by conducting the reaction at the same temperature for 8 hours. After completion of the reaction, 884.6g of ethyl acetate was added thereto to cool the reaction mixture and obtain a reaction product solution containing a reaction product (B). Analysis of infrared absorption spectrum of the reaction product solution confirmed disappearance of absorption of isocyanate group.

### Synthesis of reaction product (C):

118.2g of ethyl acetate and 169.9g of isophoronediisocyanate trimer [VESTANAT T1890; mp: 110°C] were charged in a reactor equipped with a stirrer, a reflux condenser, a dropping funnel and a thermometer, and the temperature within the system was raised to 80°C to dissolve. Subsequently, air was introduced into the solution, and 0.20g of hydroquinone monomethyl ether, 106.0g of hydroxybutyl acrylate and 0.20g of dibutyltin dilaurate were charged therein, followed by conducting the reaction at the same temperature for 5 hours. After completion of the reaction, 526.5g of ethyl acetate was added thereto to cool the reaction mixture and obtain a reaction product solution containing a reaction product (C). Analysis of infrared absorption spectrum of the reaction product solution confirmed disappearance of absorption of isocyanate group. A product obtained by distilling off ethyl acetate from the reaction product solution had a softening temperature of 72°C.

### Synthesis of reaction product (D):

124.5g of ethyl acetate and 145.7g of isophoronediisocyanate trimer [VESTANAT T1890; mp: 110°C] were charged in a reactor equipped with a stirrer, a reflux condenser, a dropping funnel and a thermometer, and the temperature within the system was raised to 80°C to dissolve. Subsequently, air was introduced into the solution, and 0.21g of hydroquinone monomethyl ether, 144.9g of caprolactone-modified acrylate [Praccel FA1DT (made by Daicel Kagaku Kogyo K.K.) and 0.21g of dibutyltin dilaurate were charged therein, followed by conducting the reaction at the same temperature for 5 hours. After completion of the reaction, 554.5g of ethyl acetate was added thereto to cool the reaction mixture and obtain a reaction product solution containing a reaction product (D). Analysis of infrared absorption spectrum of the reaction product solution confirmed disappearance of absorption of isocyanate group.

### Synthesis of reaction product (E):

95.5g of ethyl acetate and 169.9g of isophoronediisocyanate trimer [VESTANAT T1890; mp: 110°C] were charged in a reactor equipped with a stirrer, a reflux condenser, a dropping funnel and a thermometer, and the temperature within the system was raised to 80°C to dissolve. Subsequently, air was introduced into the solution, and 0.16g of hydroquinone monomethyl ether, 53.0g of acrylic acid and 0.16g of dibutyltin dilaurate were charged therein, followed by conducting the reaction at the same temperature for 8 hours. After completion of the reaction, 425.3g of ethyl acetate was added thereto to cool the reaction mixture and obtain a reaction product solution containing a reaction product (E). Analysis of infrared absorption spectrum of the reaction product solution confirmed disappearance of absorption of isocyanate group.

### Synthesis of reaction product (F):

455.4g of pentaerythritol triacrylate [Viscoat 300], 133.5g of isophoronediisocyanate trimer [VESTANAT T1890; mp: 110°C] and 0.38g of hydroquinone monomethyl ether were charged in a reactor equipped with a stirrer, a reflux condenser, a dropping funnel and a thermometer and, while introducing thereinto air, the temperature within the system was raised to 80°C to dissolve. Subsequently, 0.38g of dibutyltin dilaurate was charged therein, followed by conducting the reaction at the same temperature for 5 hours. After completion of the reaction, the reaction mixture was cooled to obtain a reaction product solution containing a reaction product (F). Analysis of infrared absorption spectrum of the reaction product solution confirmed disappearance of absorption of isocyanate group.

### Synthesis of reaction product (G) :

82.0g of ethyl acetate and 148.0g of a reaction product between isophoronediisocyanate and trimethylolpropane [Mitec NY215A (made by Mitsubishi Chemical Corporation; solid content: 75% by weight; mp of the solid component: 67°C) were charged in a reactor equipped with a stirrer, a reflux condenser, a dropping funnel and a thermometer, and the temperature within the system was raised to 80°C. Subsequently, air was introduced into the solution, and 0.20g of hydroquinone monomethyl ether, 167.7g of pentaerythritol triacrylate [Viscoat 300] and 0.20g of dibutyltin dilaurate were charged therein, followed by conducting the reaction at the same temperature for 5 hours. After completion of the reaction, 531.6g of ethyl acetate was added thereto to cool the reaction mixture and obtain a reaction product solution containing a reaction product (G). Analysis of infrared absorption spectrum of the resultant reaction product solution confirmed disappearance of absorption of isocyanate group. The product obtained by distilling off ethyl acetate from the reaction product solution had a softening temperature of 41°C.

### Synthesis of reaction product (H) :

142.7g of ethyl acetate and 169.9g of isophoronediisocyanate trimer [VESTANAT T1890] were charged in a reactor, and the temperature within the system was raised to 80°C to dissolve. After bubbling air into the solution, 0.20g of hydroquinone monomethyl ether, 163.2g of 2-hydroxy-3-phenoxypropyl acrylate and 0.20g of dibutyltin dilaurate were charged therein. After conducting the reaction at 80°C for 5 hours, 635.6g of ethyl acetate was added thereto to cool the reaction mixture and obtain a reaction product solution containing a reaction product (H). Analysis of infrared absorption spectrum of the resultant reaction product solution confirmed disappearance of absorption of isocyanate group. A product obtained by distilling off ethyl acetate from the reaction product solution had a softening temperature of 85°C.

### Synthesis of reaction product (I):

122.9g of ethyl acetate and 169.9g of isophoronediisocyanate trimer [VESTANAT T1890] were charged in a reactor, and the temperature within the system was raised to 80°C to dissolve. After bubbling air into the solution, 0.20g of hydroquinone monomethyl ether, 95.9g of hydroxybutyl acrylate, 21.0g of polyethylene glycol [PEG#300] and 0.20g of dibutyltin dilaurate were charged therein. After conducting the reaction at 80°C for 5 hours, 547.3g of ethyl acetate was added thereto to cool the reaction mixture and obtain a reaction product solution containing a reaction product (I). Analysis of infrared absorption spectrum of the resultant reaction product solution confirmed disappearance of absorption of isocyanate group. A product obtained by distilling off ethyl acetate from the reaction product solution had a softening temperature of 54°C.

### Synthesis of reaction product (J) :

144.1g of ethyl acetate and 169.9g of isophoronediisocyanate trimer [VESTANAT T1890] were charged in a reactor, and the temperature within the system was raised to 80°C to dissolve. After bubbling air into the solution, 0.20g of hydroquinone monomethyl ether, 90.6g of pentaerythritol acrylate [Viscoat 300], 75.7g of hydroxybutyl acrylate, and 0.20g of dibutyltin dilaurate were charged therein. After conducting the reaction at 80°C for 5 hours, 641.6g of ethyl acetate was added thereto to cool the reaction mixture and obtain a reaction product solution containing a reaction product (J). Analysis of infrared absorption spectrum of the resultant reaction product solution confirmed disappearance of absorption of isocyanate group. A product obtained by distilling off ethyl acetate from the reaction product solution had a softening temperature of 63°C.

### Examples 1 to 7 (for reference)

100 parts by weight of each of the reaction product solutions obtained in synthesis of the reaction products (A) to (G) (content of solids: 30% by weight) was mixed with 3 parts by weight per 100 parts by weight of the reaction product solution excluding the solvent (i.e., 0.9 part by weight per 100 parts by weight of the solution) of a photopolymerization initiator [Irgacure 184:1-hydroxycyclohexyl phenyl ketone (made by CIBA GEIGY)] to prepare an active energy ray-curable composition.

Additionally, since the reaction product (F) does not contain the solvent, 30 parts by weight of the reaction product was used in Example 6.

Each of the active energy ray-curable compositions was used as a coating solution and coated on a 2-mm thick polypropylene sheet [Mitsubishi Noblen MA3U (made by Nippon Polychem K.K.) in a dry thickness of 5 µm using a bar coater, followed by drying at 80°C for 2 minutes. This was irradiated with UV rays at 600 mJ/cm² using a high-pressure mercury lamp of 120 W/cm in output to cure the composition.

Evaluation was conducted on coating properties of each of the coating solutions and on adhesion of each of the cured coats. Results thus obtained are shown in Table 1.

Additionally, coating properties and adhesion were evaluated according to the following methods.

Coating properties: The cured coats were evaluated visually.
A: The coat was uniformly coated.
B: Cissing was observed in part of the coat.
C: Cissing was observed all over the coat (the coat being in a granular state).

Adhesion: Crosscuts were formed longitudinally and transversely in the cured coat so that the cutter reached the substrate surface, with 1-mm intervals, to form 100 crosscut pieces of 1 mm² in area. A cellophane tape was adhered thereto, then rapidely peeled off to count peeled-off crosscut pieces.
A: No piece was peeled off.
B: 1 to 50 pieces were peeled off.
C: 51 to 100 pieces were peeled off.

### Comparative Examples 1 to 7

Coating on a polypropylene sheet and curing by irradiation with UV rays were conducted in the same manner as in Example 1 except for using, in place of the reaction product solution, a solution prepared by dissolving one of varying commercially available products having an acryloyl group in ethyl acetate in a concentration of 30% by weight and shown in Table 1. However, adhesion was not evaluated because all of them showed poor coating properties. Results on the coating properties are tabulated in Table 1.

**Table 1**

| | Active energy ray-curable Compound | Coating Properties | Adhesion |
|---|---|---|---|
| Ex. 1 | Reaction product (A) | A | A |
| Ex. 2 | Reaction product (B) | A | B |
| Ex. 3 | Reaction product (C) | A | B |
| Ex. 4 | Reaction product (D) | A | B |
| Ex. 5 | Reaction product (E) | A | B |
| Ex. 6 | Reaction product (F) | A | A |
| Ex. 7 | Reaction product (G) | A | A |
| Com. Ex. 1 | Pentaerythritol triacrylate *1 | C | - |
| Com. Ex. 2 | Dipentaerythritol hexaacrylate *2 | C | - |
| Com. Ex. 3 | Dicyclopentenyl acrylate *3 | C | - |
| Com. Ex. 4 | Tricyclodecanyl acrylate *4 | C | - |
| Com. Ex. 5 | Dimethyloltricyclodecane acrylate *5 | C | - |
| Com. Ex. 6 | Pentaerythritol triacrylate hexamethylene-diisocyanate adduct *6 | C | - |
| Com. Ex. 7 | Pentaerythritol triacrylate-tolylenediisocyanate adduct *7 | C | - |

| | | | |
|---|---|---|---|
| *1: pentaerythritol triacrylate: Viscoat 300 (made by Osaka Organic Chemical Industry Co., Ltd.) *2: dipentaerythritol hexaacrylate: Kayarad DPHA (made by Nippon Kayaku Co., Ltd.) *3: dicyclopentenyl acrylate: Fancryl FA-512A (made by Hitachi Chemical Co., Ltd.) *4: tricyclodecanyl acrylate: Fancryl FA-513A (made by Hitachi Chemical Co., Ltd.) *5: dimethyloltricyclodecane diacrylate: Yupimer UV SA-1002 (made by Mitsubishi Chemical Corporation) *6: pentaerythritol triacrylate hexamethylenediisocyanate adduct: urethane acrylate UA-306H (Kyoeisha Kagaku K.K.) *7: pentaerythritol triacrylate tolylenediisocyanate adduct: urethane acrylate UA-306T (Kyoeisha Kagaku K.K.) | | | |

### Examples 8 to 13

The reaction product solution obtained in synthesis of the reaction product (A) was mixed with a filming resin in a proportion shown in Table 2, followed by adding thereto ethyl acetate to make the total amount 100 parts by weight. Thus, there were prepared solutions having solid component concentrations of 30% by weight. To each of the solutions was added 3 parts by weight per 100 parts by weight of the reaction product solution excluding the solvent (i.e., 0.9 part by weight per 100 parts by weight of the solution) of a photopolymerization initiator [Irgacure 184 (made by CIBA GEIGY)] to prepare active energy ray-curable compositions.

Additionally, in Example 12, a product obtained by removing the solvent from the reaction product solution was used in place of the reaction product solution, and toluene was used as the solvent to be added.

Coating properties of the coating solution onto a polypropylene sheet and adhesion of the resultant cured coat were evaluated in the same manner as in Example 1 except for using the active energy ray-curable compositions as the coating solution. Results thus obtained are shown in Table 2.

**Table 2**

| | Reaction Product (A) parts by weight (*1) | Filming Resin | | Coating Properties | Adhesion |
|---|---|---|---|---|---|
| | | Kind | Parts by weight | | |
| Ex. 8 | 24 (80) | Methacrylic resin *8 | 6 | A | A |
| Ex. 9 | 24 (80) | Epoxy resin *9 | 6 | A | A |
| Ex. 10 | 24 (80) | Urethane resin *10 | 6 | A | A |
| Ex. 11 | 24 (80) | Polyester resin *11 | 6 | A | A |
| Ex. 12 | 24 | Chlorinated polypropylene *12 | 6 | A | A |
| Ex. 13 | 3 (10) | Methacrylic resin *8 | 27 | A | A |

| | | | | | |
|---|---|---|---|---|---|
| *1: numerals represent parts by weight of solid components, and numerals within parentheses represent parts by weight of the reaction product solution. *8: methacrylic resin: Parapet GF (product of Kuraray Co., Ltd.) *9: epoxy resin: Epicoat 1004 (product of Yuka Shell Epoxy Co.) *10: urethane resin: Pandex T-5201 (product of Dainippon Ink and Chemicals, Incorporated) *11: polyester resin: Biron 200 (product of Toyobo K.K.) *12: chlorinated polypropylene: Superclon 822S (product of Nippon Seishi K.K.) | | | | | |

### Examples 14 to 19

24 parts by weight of the reaction product between the isocyanate compound and the (meth)acryl compound (80 parts by weight of the reaction product solution with respect to the reaction products (B) to (G)) was mixed with 6 parts by weight of a filming resin (Parapet GF made by Kuraray Co., Ltd.), followed by adding thereto ethyl acetate to make the total amount 100 parts by weight. Thus, there were prepared solutions having solid component concentrations of 30% by weight. To each of the solutions was added 3 parts by weight per 100 parts by weight of the reaction product solution excluding the solvent (i.e., 0.9 part by weight per 100 parts by weight of the solution) of a photopolymerization initiator [Irgacure 184 (made by CIBA GEIGY)] to prepare active energy ray-curable compositions. Coating properties of the coating solution onto a polypropylene sheet and adhesion of the resultant cured coat were evaluated in the same manner as in Example 1 except for using the active energy ray-curable compositions as the coating solutions. Results thus obtained are shown in Table 3.

**Table 3**

| | Reaction Product | Coating Properties | Adhesion |
|---|---|---|---|
| Ex. 14 | pentaerythritol triacrylate isophoronediisocyanate adduct *13 | A | A |
| Ex. 15 | Reaction product (B) | A | A |
| Ex. 16 | Reaction product (C) | A | A |
| Ex. 17 | Reaction product (D) | A | A |
| Ex. 18 | Reaction product (E) | A | A |
| Ex. 19 | Reaction product (G) | A | A |

| | | | |
|---|---|---|---|
| *13: pentaerythritol triacrylate.isophoronediisocyanate adduct: urethane acrylate UA-3061 (product of Kyoeisha Kagaku K.K.) | | | |

### Examples 20 to 25 (for reference)

Each of the reaction product solutions obtained above respectively containing the reaction products (A), (C), (G) to (J) (content of solids: 30% by weight) was mixed with 3 parts by weight per 100 parts by weight of the reaction product solution excluding the solvent (i.e., 0.9 part by weight per 100 parts by weight of the solution) of a photopolymerization initiator [Irgacure 184:1-hydroxycyclohexyl phenyl ketone (made by CIBA GEIGY)] to prepare active energy ray-curable compositions.

Each of the active energy ray-curable compositions was used as a coating solution and coated on a polyester film and cold-rolled steel sheet in a dry thickness of 5 µm using a bar coater, followed by drying at 80°C for 2 minutes. Subsequently, each of them was irradiated with UV rays in a dose of 600 mJ/ cm² using a high-pressure mercury lamp of 120 W/cm in output spaced at a distance of 15 cm to cure the composition.

The thus formed coats before curing were subjected to evaluation on non-tack properties, and the cured coats were subjected to evaluation on adhesion, haze and pencil hardness. Results thus obtained are shown in Table 4. Additionally, non-tack properties, adhesion, haze and pencil hardness were evaluated according to the following methods.

### Non-tack properties:

A coat on a polyester film was dried, then the surface was touched with a finger to check for tack. Samples showing no traces of finger touch were evaluated as tack-free, and samples showing the trace of finger touch as tacky.

### Adhesion:

Crosscuts were formed in the cured coat on the polyester film or on the steel sheet so that the cutter reached the substrate surface, with 1-mm intervals, to form 100 crosscut pieces of 1 mm² in area. A cellophane tape was adhered thereto, then rapidly peeled off. Peeling-off by adhesion with the cellophane tape was observed, and samples undergoing peeling-off were evaluated as "peeled-off", and samples undergoing no peeling-off as "non-peeled-off"

### Haze:

Haze was measured with respect to a cured coat on the polyester film using a haze meter.

### Pencil hardness:

Pencil hardness was measured according to the pencil-scratching test of JIS K5400.

### Comparative Example 8

The same procedures as in Example 20 were conducted except for using pentaerythritol triacrylate [Viscoat 300 (made by Osaka Organic Chemical Industry Co., Ltd.) in place of the reaction product solution. Results are shown in Table 4.

### Reference Example 1

The same procedures as in Example 20 were conducted except for using an adduct between pentaerythritol triacrylate and isophoronediisocyanate (mp: -60°C) [urethane acrylate UA-3061 (product of Kyoeisha Kagaku K.K.); softening point: 25°C or lower] in place of the reaction product solution. Results are shown in Table 4.

**Table 4**

| | Active Energy Ray-Curable Component | Results of Evaluation | | | |
|---|---|---|---|---|---|
| | | Non-tack Properties | Adhesion | Haze (%) | Hardness |
| Ex. 20 | Reaction product (A) | tack-free | non-peeled-off | 1.4 | 4H |
| Ex. 21 | Reaction product (C) | tack-free | non-peeled-off | 1.2 | 4H |
| Ex. 22 | Reaction product (G) | tack-free | non-peeled-off | 1.3 | 3H |
| Ex. 23 | Reaction product (H) | tack-free | non-peeled-off | 1.4 | 4H |
| Ex. 24 | Reaction product (I) | tack-free | non-peeled-off | 1.4 | H |
| Ex. 25 | Reaction product (J) | tack-free | non-peeled-off | 1.3 | 4H |
| Com. Ex. 80 | Pentaerythritol triacrylate | tacky | - | - | - |
| Ref. Ex. 1 | Pentaerythritol triacrylate isophoronediisocyanate adduct *13 | tacky | - | - | - |

### Examples 26 to 31

The reaction product solution obtained in synthesis of the reaction product (A) was mixed with a filming resin in a proportion shown in Table 5, followed by adding thereto 70 parts by weight of ethyl acetate to make the total amount 100 parts by weight. To each of the solutions was added 3 parts by weight per 100 parts by weight of the reaction product solution excluding the solvent (i.e., 0.9 part by weight per 100 parts by weight of the solution) of a photopolymerization initiator [Irgacure 184 (made by CIBA GEIGY)] to prepare active energy ray-curable compositions. Non-tack properties were evaluated with respect to coats before curing, and adhesion was evaluated with respect to cured coats. Results are shown in Table 5.

**Table 5**

| | Reaction Product (A) parts by weight (*2) | Filming Resin | | Non-tack Properties | Adhesion |
|---|---|---|---|---|---|
| | | Kind | Parts by weight | | |
| Ex. 26 | 24 | Methacrylic resin *8 | 6 | tack-free | non-peeled-off |
| Ex. 27 | 24 | Epoxy resin *9 | 6 | tack-free | non-peeled-off |
| Ex. 28 | 24 | Urethane resin *10 | 6 | tack-free | non-peeled-off |
| Ex. 29 | 24 | Polyester resin *11 | 6 | tack-free | non-peeled-off |
| Ex. 30 | 3 | Methacrylic resin *8 | 27 | tack-free | non-peeled-off |
| Ex. 31 | 1.5 | Methacrylic resin *8 | 28.5 | tack-free | peeled-off |

| | | | | | |
|---|---|---|---|---|---|
| *2: numerals represent parts by weight of solid components | | | | | |

### <Industrial Applicability>

The invention enables to form a coat on polyolefin with a good adhesion, and provides a tack-free coat.

## Claims

1. A laminate comprising a polyolefin substrate having formed thereon a layer comprising an active energy ray-curable composition which comprises a reaction product between an isocyanate compound having an isocyanate group bound to a non-aromatic hydrocarbon ring, a (meth)acryl compound having a (meth)acryloyl group and being capable of reacting with the isocyanate group and a hydroxyl group-containing compound; and a filming resin, wherein the reaction product between the isocyanate compound, the (meth)acryl compound and the hydroxyl group-containing compound has a softening point of 40°C or higher, which is the temperature at which melt viscosity becomes 5000 Pa·s.

2. The laminate as defined in claim 1, wherein the isocyanate compound is an isocyanate compound having a melting point of 40°C or higher.

3. The laminate as defined in claim 1 or 2, wherein the isocyanate compound is isophoronediisocyanate, or isophoronediisocyanate trimer.

4. The laminate as defined in any one of claims 1 to 3, wherein the (meth)acryl compound is (meth)acrylic acid.

5. The laminate as defined in any one of claims 1 to 3, wherein the (meth)acryl compound is hydroxyl group-containing (meth)acrylate.

6. A method of adhering polyolefin, which comprises using an active energy ray-curable composition which comprises a reaction product between an isocyanate compound having an isocyanate group bound to a non-aromatic hydrocarbon ring, a (meth)acryl compound having a (meth)acryloyl group and being capable of reacting with the isocyanate group and a hydroxyl group-containing compound; and a filming resin, wherein the reaction product between the isocyanate compound, the (meth)acryl compound and the hydroxyl group-containing compound has a softening point of 40°C or higher, which is the temperature at which melt viscosity becomes 5000 Pa·s.

7. The adhering method as defined in claim 6, wherein the isocyanate compound is an isocyanate compound having a melting point of 40°C or higher.

8. The adhering method as defined in claim 6 or 7, wherein the isocyanate compound is isophoronediisocyanate, or isophoronediisocyanate trimer.

9. The adhering method as defined in any one of claims 6 to 8, wherein the (meth)acryl compound is (meth)acrylic acid.

10. The adhering method as define in any one of claims 6 to 8, wherein the (meth)acryl compound is hydroxyl group-containing (meth)acrylate.

11. A process for producing a substrate with a coat, which comprises forming on the substrate a liquid coat layer, said coat layer comprising an active energy ray-curable composition comprising a reaction product between an isocyanate compound having a melting point of 40°C or higher, a (meth)acryl compound having a (meth)acryloyl group and being capable of reacting with the isocyanate group and a hydroxyl group-containing compound, which product has a softening point of 40°C or higher, which is the temperature at which melt viscosity becomes 5000 Pa·s, and a filming resin, conducting fabrication, then curing the active energy ray-curable composition.

12. A laminate comprising a substrate having formed thereon a layer comprising an active energy ray-curable composition comprising a reaction product between an isocyanate compound having a melting point of 40°C or higher, a (meth)acryl compound having a (meth)acryloyl group and being capable of reacting with the isocyanate group, and a hydroxyl group-containing compound, which product has a softening point of 40°C or higher, which is the temperature at which melt viscosity becomes 5000 Pa·s, and a filming resin, wherein the content of the filming resin is 20 to 40% by weight based on the weight of the composition excluding the solvent.

13. The laminate as defined in claim 12, wherein the filming resin is selected from methacrylic resins, chlorinated polypropylene, epoxy resins, polyurethane resins and polyester resins.

14. An active energy ray-curable composition, which comprises a reaction product between an isocyanate compound having an isocyanate group bound to a non-aromatic hydrocarbon ring, a (meth)acryl compound having a (meth)acryloyl group and being capable of reacting with the isocyanate group and a hydroxyl group-containing compound; and a filming resin, wherein the content of the filming resin is 20 to 40% by weight based on the weight of the composition excluding the solvent, wherein the reaction product between the isocyanate compound, the (meth)acryl compound and the hydroxyl group-containing compound has a softening point of 40°C or higher, which is the temperature at which melt viscosity becomes 5000 Pa·s.

15. The active energy ray-curable composition as defined in claim 14, wherein the filming resin is selected from methacrylic resins, chlorinated polypropylene, epoxy resins, polyurethane resins and polyester resins.

16. The active energy ray-curable composition as defined in claim 14 or 15, wherein the isocyanate compound is an isocyanate compound having a melting point of 40°C or higher.

17. The active energy ray-curable composition as defined in any one of claims 14 to 16, wherein the isocyanate compound is isophoronediisocyanate trimer.

18. The active energy ray-curable composition as defined in any one of claims 14 to 17, wherein the (meth)acryl compound is (meth)acrylic acid.

19. The active energy ray-curable composition as defined in any one of claims 14 to 17, wherein the (meth)acryl compound is hydroxyl group-containing (meth)acrylate.

20. A substrate for emboss processing having a coat formed by coating the active energy ray-curable composition as defined in claim 14 on a substrate and drying.

## Patentansprüche

1. Ein Laminat, umfassend einen Polyolefin-Träger, der eine darauf geformte Schicht aufweist, umfassend eine durch aktive Strahlung härtbare Zusammensetzung, welche ein Reaktionsprodukt zwischen einer Isocyanatverbindung, die einen Isocyanatrest, der an einen nicht-aromatischen Kohlenwasserstoffring gebunden ist, aufweist, einer (Meth)acrylverbindung, die einen (Meth)acryloylrest aufweist und fähig ist, mit dem Isocyanatrest zu reagieren, und einer eine Hydroxylgruppe enthaltenden Verbindung umfasst; und ein schichtbildendes Harz, wobei das Reaktionsprodukt zwischen der Isocyanatverbindung, der (Meth)acrylverbindung und der eine Hydroxylgruppe enthaltenden Verbindung einen Erweichungspunkt von 40°C oder höher aufweist, was der Temperatur entspricht, bei der die Schmelzviskosität 5000 Pa·s wird.

2. Das Laminat wie in Anspruch 1 definiert, wobei die Isocyanatverbindung eine Isocyanatverbindung mit einem Schmelzpunkt von 40°C oder höher ist.

3. Das Laminat wie in Anspruch 1 oder 2 definiert, wobei die Isocyanatverbindung Isophorondiisocyanat oder Isophorondiisocyanattrimer ist.

4. Das Laminat wie in einem der Ansprüche 1 bis 3 definiert, wobei die (Meth)acrylverbindung (Meth)acrylsäure ist.

5. Das Laminat wie in einem der Ansprüche 1 bis 3 definiert, wobei die (Meth)acrylverbindung ein eine Hydroxylgruppe enthaltendes (Meth)acrylat ist.

6. Ein Verfahren zum Anhaften von Polyolefin, umfassend das Verwenden einer durch aktive Strahlung härtbaren Zusammensetzung, welche ein Reaktionsprodukt zwischen einer Isocyanatverbindung, die einen Isocyanatrest, der an einen nicht-aromatischen Kohlenwasserstoffring gebunden ist, aufweist, einer (Meth)acrylverbindung, die einen (Meth)acryloylrest aufweist und fähig ist, mit dem Isocyanatrest zu reagieren, und einer eine Hydroxylgruppe enthaltenden Verbindung umfasst; und ein schichtbildendes Harz, wobei das Reaktionsprodukt zwischen der Isocyanatverbindung, der (Meth)acrylverbindung und der eine Hydroxylgruppe enthaltenden Verbindung einen Erweichungspunkt von 40°C oder höher aufweist, was der Temperatur entspricht, bei der die Schmelzviskosität 5000 Pa·s wird.

7. Das Verfahren zum Anhaften wie in Anspruch 6 definiert, wobei die Isocyanatverbindung eine Isocyanatverbindung mit einem Schmelzpunkt von 40°C oder höher ist.

8. Das Verfahren zum Anhaften wie in Anspruch 6 oder 7 definiert, wobei die Isocyanatverbindung Isophorondiisocyanat oder Isophorondiisocyanattrimer ist.

9. Das Verfahren zum Anhaften wie in einem der Ansprüche 6 bis 8 definiert, wobei die (Meth)acrylverbindung (Meth)acrylsäure ist.

10. Das Verfahren zum Anhaften wie in einem der Ansprüche 6 bis 8 definiert, wobei die (Meth)acrylverbindung ein eine Hydroxylgruppe enthaltendes (Meth)acrylat ist.

11. Ein Verfahren zur Herstellung eines Trägers mit einer Beschichtung, umfassend das Formen einer flüssigen Beschichtungsschicht auf dem Träger, wobei die Beschichtungsschicht eine durch aktive Strahlung härtbare Zusammensetzung, umfassend ein Reaktionsprodukt zwischen einer Isocyanatverbindung, die einen Schmelzpunkt von 40°C oder höher aufweist, einer (Meth)acrylverbindung, die einen (Meth)acryloylrest aufweist und fähig ist, mit dem Isocyanatrest zu reagieren, und einer eine Hydroxylgruppe enthaltenden Verbindung, wobei das Produkt einen Erweichungspunkt von 40°C oder höher aufweist, was der Temperatur entspricht, bei der die Schmelzviskosität 5000 Pa·s wird, und ein schichtbildendes Harz umfasst, das Durchführen der Fabrikation, dann Härten der durch aktive Strahlung härtbaren Zusammensetzung.

12. Ein Laminat, umfassend einen Träger, der eine darauf geformte Schicht aufweist, die eine durch aktive Strahlung härtbare Zusammensetzung, umfassend ein Reaktionsprodukt zwischen einer Isocyanatverbindung, die einen Schmelzpunkt von 40°C oder höher aufweist, einer (Meth)acrylverbindung, die einen (Meth)acryloylrest aufweist und fähig ist, mit dem Isocyanatrest zu reagieren, und einer eine Hydroxylgruppe enthaltenden Verbindung, wobei das Produkt einen Erweichungspunkt von 40°C oder höher aufweist, was der Temperatur entspricht, bei der die Schmelzviskosität 5000 Pa·s wird, und ein schichtbildendes Harz umfasst, wobei der Gehalt an dem schichtbildenden Harz 20 bis 40 Gew.-%, basierend auf dem Gewicht der Zusammensetzung ohne das Lösungsmittel, beträgt.

13. Das Laminat wie in Anspruch 12 definiert, wobei das schichtbildende Harz ausgewählt ist aus methacrylischen Harzen, chloriertem Polypropylen, Epoxidharzen, Polyurethanharzen und Polyesterharzen.

14. Eine durch aktive Strahlung härtbare Zusammensetzung, umfassend ein Reaktionsprodukt zwischen einer Isocyanatverbindung, die einen Isocyanatrest, der an einen nicht-aromatischen Kohlenwasserstoffring gebunden ist, aufweist, einer (Meth)acrylverbindung, die einen (Meth)acryloylrest aufweist und fähig ist, mit dem Isocyanatrest zu reagieren, und einer eine Hydroxylgruppe enthaltenden Verbindung; und ein schichtbildendes Harz, wobei der Gehalt an dem schichtbildenden Harz 20 bis 40 Gew.-%, basierend auf dem Gewicht der Zusammensetzung ohne das Lösungsmittel, beträgt, wobei das Reaktionsprodukt zwischen der Isocyanatverbindung, der (Meth)acrylverbindung und der eine Hydroxylgruppe enthaltenden Verbindung einen Erweichungspunkt von 40°C oder höher aufweist, was der Temperatur entspricht, bei der die Schmelzviskosität 5000 Pa·s wird.

15. Die durch aktive Strahlung härtbare Zusammensetzung wie in Anspruch 14 definiert, wobei das schichtbildende Harz ausgewählt ist aus methacrylischen Harzen, chloriertem Polypropylen, Epoxidharzen, Polyurethanharzen und Polyesterharzen.

16. Die durch aktive Strahlung härtbare Zusammensetzung wie in Anspruch 14 oder 15 definiert, wobei die Isocyanatverbindung eine Isocyanatverbindung mit einem Schmelzpunkt von 40°C oder höher ist.

17. Die durch aktive Strahlung härtbare Zusammensetzung wie in einem der Ansprüche 14 bis 16 definiert, wobei die Isocyanatverbindung Isophorondiisocyanattrimer ist.

18. Die durch aktive Strahlung härtbare Zusammensetzung wie in einem der Ansprüche 14 bis 17 definiert, wobei die (Meth)acrylverbindung (Meth)acrylsäure ist.

19. Die durch aktive Strahlung härtbare Zusammensetzung wie in einem der Ansprüche 14 bis 17 definiert, wobei die (Meth)acrylverbindung ein eine Hydroxylgruppe enthaltendes (Meth)acrylat ist.

20. Ein Träger fiir Präge-Verarbeitung, der eine Schicht aufweist, geformt durch Beschichten der durch aktive Strahlung härtbaren Zusammensetzung wie in Anspruch 14 definiert auf einem Träger und Trocknen.

## Revendications

1. Stratifié comprenant un substrat polyoléfinique sur lequel est formée une couche comprenant une composition durcissable par rayonnement d'énergie active qui comprend un produit de réaction entre un composé d'isocyanate ayant un groupe isocyanate lié à un cycle hydrocarboné non aromatique, un composé (méth)acrylique ayant un groupe (méth)acryloyle et étant capable de réagir avec le groupe isocyanate et un composé contenant un groupe hydroxyle ; et une résine de formation de film, dans lequel le produit de réaction entre le composé d'isocyanate, le composé (méth)acrylique et le composé contenant un groupe hydroxyle possède un point de ramollissement supérieur ou égal à 40 °C, qui est la température à laquelle la viscosité à l'état fondu devient égale à 5000 Pa·s.

2. Stratifié tel que défini selon la revendication 1, dans lequel le composé d'isocyanate est un composé d'isocyanate, ayant un point de fusion supérieur ou égal à 40 °C.

3. Stratifié tel que défini selon la revendication 1 ou 2, dans lequel le composé d'isocyanate est le diisocyanate d'isophorone ou le trimère de diisocyanate d'isophorone.

4. Stratifié tel que défini selon l'une quelconque des revendications 1 à 3, dans lequel le composé (méth)acrylique est un acide (méth)acrylique.

5. Stratifié tel que défini selon l'une quelconque des revendications 1 à 3, dans lequel le composé (méth)acrylique est un (méth)acrylate contenant un groupe hydroxyle.

6. Procédé d'adhérence d'une polyoléfine, qui comprend l'utilisation d'une composition durcissable par rayonnement d'énergie active comprenant un produit de réaction entre un composé d'isocyanate ayant un groupe isocyanate lié à un cycle hydrocarboné non aromatique, un composé (méth)acrylique ayant un groupe (méth)acryloyle et étant capable de réagir avec le groupe isocyanate et un composé contenant un groupe hydroxyle ; et une résine de formation de film, dans lequel le produit de réaction entre le composé d'isocyanate, le composé (méth)acrylique et le composé contenant un groupe hydroxyle a un point de ramollissement supérieur ou égal à 40 °C, qui est la température à laquelle la viscosité à l'état fondu devient égale à 5000 Pa·s.

7. Procédé d'adhérence tel que défini selon la revendication 6, dans lequel le composé d'isocyanate est un composé d'isocyanate ayant un point de fusion supérieur ou égal à 40 °C.

8. Procédé d'adhérence tel que défini selon la revendication 6 ou 7, dans lequel le composé d'isocyanate est le diisocyanate d'isophorone, ou le trimère de diisocyanate d'isophorone.

9. Procédé d'adhérence tel que défini selon l'une quelconque des revendications 6 à 8, dans lequel le composé (méth)acrylique est un acide (méth)acrylique.

10. Procédé d'adhérence tel que défini selon l'une quelconque des revendications 6 à 8, dans lequel le composé (méth)acrylique est un (méth)acrylate contenant un groupe hydroxyle.

11. Procédé de production d'un substrat avec un revêtement, qui comprend la formation sur le substrat d'une couche de revêtement liquide, ladite couche de revêtement comprenant une composition durcissable par rayonnement d'énergie active comprenant un produit de réaction entre un composé d'isocyanate ayant un point de fusion supérieur ou égal à 40 °C, un composé (méth)acrylique ayant un groupe (méth)acryloyle et étant capable de réagir avec le groupe isocyanate et un composé contenant un groupe hydroxyle, lequel produit a un point de ramollissement supérieur ou égal à 40 °C, qui est la température à laquelle la viscosité à l'état fondu devient égale à 5000 Pa·s, et une résine de formation de film, la réalisation de la fabrication, puis le durcissement de la composition durcissable par rayonnement d'énergie active.

12. Stratifié comprenant un substrat sur lequel est formée une couche comprenant une composition durcissable par rayonnement d'énergie active comprenant un produit de réaction entre un composé d'isocyanate ayant un point de fusion supérieur ou égal à 40 °C, un composé (méth)acrylique ayant un groupe (méth)acryloyle et étant capable de réagir avec le groupe isocyanate, et un composé contenant un groupe hydroxyle, lequel produit a un point de ramollissement supérieur ou égal à 40 °C, qui est la température à laquelle la viscosité à l'état fondu devient égale à 5000 Pa·s, et une résine de formation de film, dans lequel la teneur en résine de formation de film est comprise dans la plage allant de 20 à 40 % en poids sur la base du poids de la composition en excluant le solvant.

13. Stratifié tel que défini selon la revendication 12, dans lequel la résine de formation de film est choisie parmi les résines méthacryliques, le polypropylène chloré, les résines époxy, les résines de polyuréthane et les résines de polyester.

14. Composition durcissable par rayonnement d'énergie active, qui comprend un produit de réaction entre un composé d'isocyanate ayant un groupe isocyanate lié à un cycle hydrocarboné non aromatique, un composé (méth)acrylique ayant un groupe (méth)acryloyle et étant capable de réagir avec le groupe isocyanate et un composé contenant un groupe hydroxyle ; et une résine de formation de film, dans laquelle la teneur en résine de formation de film est comprise dans la plage allant de 20 à 40 % en poids sur la base du poids de la composition en excluant le solvant, dans laquelle le produit de réaction entre le composé d'isocyanate, le composé (méth)acrylique et le composé contenant un groupe hydroxyle a un point de ramollissement supérieur ou égal à 40°C, qui est la température à laquelle la viscosité à l'état fondu devient égale à 5000 Pa·s.

15. Composition durcissable par rayonnement d'énergie active telle que définie selon la revendication 14, dans laquelle la résine de formation de film est choisie parmi les résines méthacryliques, le polypropylène chloré, les résines époxy, les résines de polyuréthane et les résines de polyester.

16. Composition durcissable par rayonnement d'énergie active telle que définie selon la revendication 14 ou 15, dans laquelle le composé d'isocyanate est un composé d'isocyanate ayant un point de fusion supérieur ou égal à 40 °C.

17. Composition durcissable par rayonnement d'énergie active telle que définie selon l'une quelconque des revendications 14 à 16, dans laquelle le composé d'isocyanate est le trimère de diisocyanate d'isophorone.

18. Composition durcissable par rayonnement d'énergie active telle que définie selon l'une quelconque des revendications 14 à 17, dans laquelle le composé (méth)acrylique est un acide (méth)acrylique.

19. Composition durcissable par rayonnement d'énergie active telle que définie selon l'une quelconque des revendications 14 à 17, dans laquelle le composé (méth)acrylique est un (méth)acrylate comprenant un groupe hydroxyle.

20. Substrat pour un traitement de marquage en relief ayant un revêtement formé par revêtement de la composition durcissable par rayonnement d'énergie active telle que définie selon la revendication 14 sur un substrat et par séchage.
